Europäisches Patentamt

European Patent Office

Office européen des brevets

(19)

(11) Veröffentlichungsnummer: **0 266 749**
**A2**

(12) ## EUROPÄISCHE PATENTANMELDUNG

(21) Anmeldenummer: 87116185.7

(22) Anmeldetag: 03.11.87

(51) Int. Cl.⁴: **B60G 17/00**

(30) Priorität: 07.11.86 DE 3637984

(43) Veröffentlichungstag der Anmeldung:
11.05.88 Patentblatt 88/19

(84) Benannte Vertragsstaaten:
DE ES FR GB IT SE

(71) Anmelder: BAYERISCHE MOTOREN WERKE
Aktiengesellschaft
Postfach 40 02 40 Petuelring 130 - AJ-36
D-8000 München 40(DE)

(72) Erfinder: Hagen, Hans, Dr., Dipl.-Ing.
Adalbertstrasse 10
D-8000 München 40(DE)
Erfinder: Müller, Rudolf, Dipl.-Ing.(FH)
Thomas-Schwarz-Strasse 43
D-8060 Dachau(DE)

(74) Vertreter: Draeger, Karlfried
Bayerische Motoren Werke
Aktiengesellschaft Postfach 40 02 40
Petuelring 130 - AJ 36
D-8000 München 40(DE)

(54) **Federung für Fahrzeuge, insbesondere Kraftfahrzeuge.**

(57) Bei einer Fahrzeugfederung ist die Hinterradfederung als aktive Federung und die Vorderradfederung als passive Federung ausgebildet. Die Steuerimpulse für die aktive Hinterradfederung werden von den Fahrzeugvorderrädern geliefert, die als Fahrbahnabtastsensoren wirken.

EP 0 266 749 A2

## Federung für Fahrzeuge, insbesondere Kraftfahrzeuge

Die Erfindung betrifft eine Federung für Fahrzeuge, insbesondere Kraftfahrzeuge, nach dem Oberbegriff des Patentanspruchs.

Aktive Fahrzeugfederungen, mit denen einerseits die Fahrsicherheit und andererseits der Fahrkomfort erhöht werden sollen, sind bekannt (DE-OS 27 38 455, DE-OS 33 08 011, DE-OS 34 24 979, DE-OS 34 34 757, US-PS 3 124 368; Darenberg, Gall und Acker, Chancen und Probleme aktiver Kraftfahrzeugfederungen, VDI-Berichte Nr. 515, 1984, Seiten 187 - 194; Fuhrmann, Aktive Federung für morgen?, CH-Zeitung Automobil Revue Nr. 46/1983 vom 10.11.1983, Seite 45). Ferner ist bekannt, die Auslenkungen, die ein Fahrzeugvorderrad durch Fahrbahnunebenheiten erfährt und die somit Informationen über das Fahrbahnprofil liefern, als Steuergrößen für die aktive Federung zu benutzen (EP-OS 192 178; Fuhrmann, Das denkende Fahrwerk, DE-Zeitschrift Mot, Heft 4/1984, Seiten 46 - 48). Bei den bekannten aktiven Fahrzeugfederungen ist stets eine aktive Federung sowohl an den Fahrzeugvorderrädern als auch an den Fahrzeughinterrädern vorgesehen. Dies bedingt einen erheblichen Aufwand.

Der Erfindung liegt die Aufgabe zugrunde, die Vorteile, die mit einer aktiven Fahrzeugfederung verbunden sind, mit verhältnismäßig geringem Aufwand weitgehend zu erzielen.

Die Lösung dieser Aufgabe ist in dem Patentanspruch angegeben.

Nach der Erfindung wirken somit die Abtastsignale nur auf eine ausschließlich an den Fahrzeughinterrädern vorgesehene aktive Federung, während an den Fahrzeugvorderrädern eine passive Federung vorgesehen ist.

Durch die Erfindung wird eine Optimierung erreicht, die einen Kompromiß zwischen den gegensätzlichen Forderungen darstellt, einerseits den Aufwand so gering wie möglich zu halten und andererseits die potentiellen Möglichkeiten einer aktiven Fahrzeugfederung möglichst vollständig auszunutzen.

Gemäß der Erfindung steht für die Aktivierung der Hinterradfederung ein ausreichender Zeitraum zur Verfügung. Beispielsweise beträgt bei einem Radstand von 2,5 m und einer Fahrgeschwindigkeit von 90 km/h der zeitliche Abstand zwischen dem Überfahren eines bestimmten Fahrbahnortes durch die Fahrzeugvorderräder und die Fahrzeughinterräder 0,1 s. Die zur Verfügung stehende Zeit zwischen der Signalerfassung an den Fahrzeugvorderrädern und der nach der Signalverarbeitung erfolgenden Einstellung der Fahrzeughinterräder ermöglicht, die Aktivfederung mit akzeptablem Leistungsaufwand zu betätigen. An den Fahrzeugvorderrädern ist dabei für die Federung nur der herkömmliche Aufwand für eine passive Federung erforderlich.

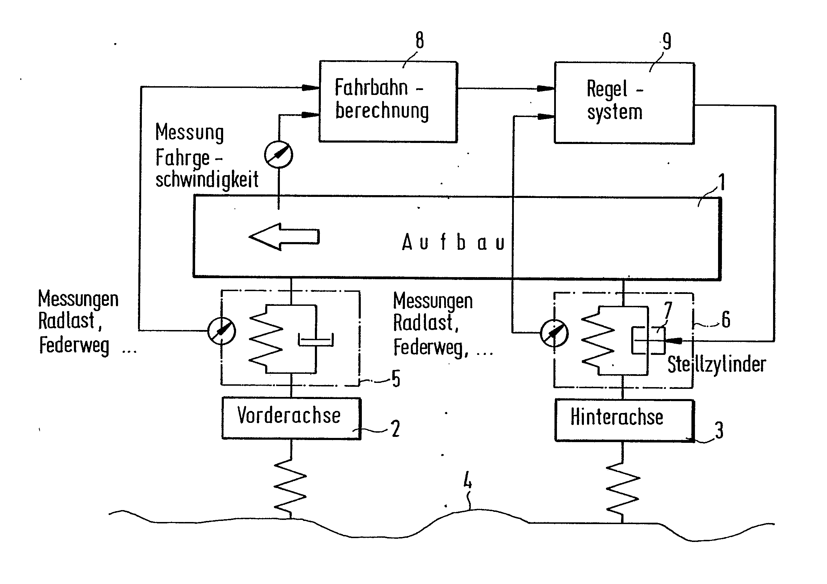

In der Zeichnung ist ein Ausführungsbeispiel der Erfindung schematisch dargestellt.

Der Aufbau 1 eines nicht weiter dargestellten Kraftfahrzeugs, das sowohl ein Personenkraftwagen als auch ein Nutzkraftwagen sein kann und dessen Vorwärtsfahrtrichtung durch einen Pfeil angedeutet ist, stützt sich über eine Vorderachse 2 mit Fahrzeugvorderrädern und eine Hinterachse 3 mit Fahrzeughinterrädern auf einer Fahrbahn 4 ab. Zwischen der Vorderachse 2 und dem Aufbau 1 ist in herkömmlicher Weise für jedes der Fahrzeugvorderräder eine passive Feder-Dämpfungs-Einrichtung 5 angeordnet. Zwischen der Hinterachse 3 und dem Aufbau 1 ist für jedes der Fahrzeughinterräder eine aktive Federeinrichtung 6 mit Stellzylinder 7 vorgesehen.

Die für die Steuerung der aktiven Federeinrichtung 6 benötigten Daten werden mit Sensoren in bekannter Weise erfaßt. Die im vorderen Fahrzeugbereich ermittelten Meßwerte werden einem Rechner 8 zugeführt, dem ferner die Fahrgeschwindigkeit signalisiert wird. Aufgrund der ihm zugeleiteten Eingangssignale ermittelt der Rechner 8 die Kontur der Fahrbahn 4. Ein der Fahrbahnkontur entsprechendes Signal wird von dem Rechner 8 als Führungsgröße einem Regelsystem 9 zugeleitet, das den Abstand zwischen Aufbau 1 und Hinterachse 3 einstellt. Die bei Vorwärtsfahrt den Fahrzeugvorderrädern in durch die Fahrzeugkonstruktion festgelegtem Abstand folgenden Fahrzeughinterräder werden demnach in ihrer Höhenlage laufend dem durch die Fahrzeugvorderräder, die als Fahrbahnabtastsensoren wirken, ermittelten Fahrbahnprofil entsprechend eingestellt. Der Aufbau 1 ändert dabei seine Höhenlage nicht oder nur unwesentlich.

Die Steuerung der Hubbewegungen nur der Fahrzeughinterräder erbringt gegenüber einer ausschließlich passiven Federung einen erheblichen Gewinn und bewirkt gegenüber einer sowohl an den Fahrzeugvorderrädern als auch an den Fahrzeughinterrädern vorgesehenen aktiven Fahrzeugfederung eine Einbuße an Fahrsicherheit und Fahrkomfort, die gering ist. Die aktive Fahrzeugfederung ausschließlich an den Fahrzeughinterrädern ist vorteilhaft, da die Hinterachse in besonderem Maße für die Fahrsicherheit (Stabilität), die Fahrdynamik und den Fahrkomfort maßgebend ist. Dies gilt hinsichtlich Fahrdynamik insbesondere für Kraftfahrzeuge mit Standardantrieb, also mit vorne angeordnetem Fahrzeugmotor und Hinterradantrieb.

Die Aktivfederung an den Fahrzeughinterrädern kann gleichzeitig zur Niveauregulierung herangezogen werden.

In Ausgestaltung der Erfindung können an den Fahrzeugvorderrädern bei den passiven Feder-Dämpfungs-Einrichtungen einstellbare Stoßdämpfer mit zwischen Grenzen willkürlich veränderbarer Dämpfkraft eingesetzt werden. Diese Stoßdämpfer können für quasi-stationäre Verhältnisse von der aktiven Federung an der Hinterachse gesteuert werden, beispielsweise derart, daß die Verstellung der Stoßdämpfer phasenrichtig erfolgt.

## Ansprüche

Federung für Fahrzeuge, insbesondere Kraftfahrzeuge, die zwischen Fahrzeugrädern und Aufbau angeordnet ist, bei der die Hinterradfederung als aktive Federung ausgebildet ist und die Fahrzeugvorderräder als Fahrbahnabtastsensoren ausgebildet sind und in Regelungsverbindung mit der aktiven Hinterradfederung stehen,
**dadurch gekennzeichnet,**
daß die Vorderradfederung als passive Federung ausgebildet ist.

0 266 749